# EUROPEAN PATENT APPLICATION

(11) **EP 1 494 463 A1**
(43) Date of publication of application: **05.01.2005**
(21) Application number: 03745904.7
(22) Date of filing: 03.04.2003
(51) Int. Cl.: H04N 5/232

(54) **WIRELESS IMAGING DEVICE CONTROL METHOD**

(30) Priority: 05.04.2002 JP 2002103943
(71) Applicant: Sony Corporation, Tokyo 141-0001 (JP)
(72) Inventor: ISHIZAKA, Kazuo, c/o SONY CORPORATION, Tokyo 141-0001 (JP); MATSUMOTO, Hideyuki, c/o SONY CORPORATION, Tokyo 141-0001 (JP)
(74) Representative: DeVile, Jonathan Mark, Dr.
(86) International application number: PCT/JP2003/004294
(87) International publication number: WO 2003/085962

(57) **Abstract**

The present invention is relative to a controlling method for a wireless camera in a wireless camera system. This wireless camera system (300) includes a wireless camera (210) capable of transmitting image signals over a wireless route, a cabled camera (310) for transmitting image signals over a cable, and a receiving apparatus (400) for receiving the image signals transmitted from each camera and for controlling the camera. The wireless camera superposes a response signal to a control signal from the receiving apparatus on the image signals to send the resulting signals to the receiving apparatus over a wireless route.

## Description

### Technical Field

This invention relates to a controlling method for controlling a wireless image pickup apparatus forming a wireless image pickup system. This invention claims priority of Japanese Patent Application No,2002-103493, filed in Japan on April 5, 2002, the entirety of which is incorporated by reference herein.

### Background Art

Up to now, a wireless camera has been used for image pickup on a relay site of television broadcast, such as a news program, a sports program or a variety of event programs. With the wireless camera, the image information or the speech information, imaged by the camera, is transmitted by radio ground wave to a receiving base station, such as a relay car. Thus, as compared to the case of a cabled camera, having cable connection, the labor of laying or dismounting a cable may be dispensed with, while the degree of freedom in a camera angle or a photographing position is increased and the mobility on the image pickup site is improved. It is felt that, in view of these features of the wireless camera, the application and usage of the wireless camera will become more and more widespread in future.

As the wireless camera has become popular, there is being raised a demand for establishing a method for controlling the wireless camera. For example, there are occasions where a sole object is imaged by plural cameras, as in the case of relaying a sports event. Since the problem of difference in color tone at switching points then arises, the information of the respective cameras needs to be acquired on the side of the receiving base station to adjust e.g. the auto-white balance (AWB) or the auto-black balance (ABB) based on the so acquired camera information. For a camera other than the wireless camera (cabled camera), it is rather easy to transmit the camera information as a reply signal to a control signal from the receiving base station. However, for a wireless camera, in which the communication from the receiving base station to the wireless camera is possible only in a single direction, it is not possible to confirm the relative operation between the wireless camera and the receiving base station (handshaking).

Thus, the following technique is used for substantive handshaking between the wireless camera and the receiving base station. First, there is a virtual technique in which a reply signal is deemed to have been issued from the wireless camera to the receiving base station when the unidirectional communication has been made from the receiving base station to the wireless camera. However, such virtual technique is unable to guarantee the desired communication stability. On the other hand, if the half-duplex communication, such as is achieved by a transceiver, is used as communication from the receiving base station to the wireless camera, an extremely long time is involved in making a response. A handshaking is not established when the time exceeding 100 msec has elapsed before a response is made, because the routine practice is for the receiving base station to deem that communication has ceased. In order to overcome such inconvenience, it has been proposed to provide means for unidirectional communication on the side of the wireless camera. However, if such communication means is provided on the side of the wireless camera, not only is the mobility of the wireless camera affected, but also there is presented a problem in connection with the electrical wave efficiency.

### Disclosure of the Invention

It is therefore an object of the present invention to provide a novel controlling method for a wireless image pickup apparatus whereby it is possible to overcome the problem inherent in the conventional wireless image pickup apparatus.

It is another object of the present invention to provide a novel controlling method for a wireless image pickup apparatus whereby it is possible to establish a communication protocol substantially similar to that for the full duplex communication without incurring problems related with electrical wave efficiency.

For accomplishing the above object, the present invention provides a controlling method for a wireless image pickup apparatus in a wireless image pickup system, in which the wireless image pickup system comprises one or more image pickup apparatus for imaging an object, and a receiving apparatus for transmitting, from the image pickup apparatus, a control signal controlling the image pickup apparatus to the image pickup apparatus and for receiving main line signals, including the video/audio information of the object and the system information of the image pickup apparatus, including in turn the system information of the image pickup apparatus. One of the image pickup apparatus is a wireless image pickup apparatus capable of transmitting the main line signals over a wireless route. The wireless image pickup apparatus superposes the response information on a control signal from the receiving apparatus on the main line signals to transmit the resulting signal over a wireless route to the receiving apparatus.

In the controlling method for a wireless image pickup apparatus in a wireless image pickup system, according to the present invention, the response information to the control signal for the wireless image pickup apparatus from the receiving apparatus is superposed on the main line signals transmitted from the wireless image pickup apparatus to the receiving apparatus. This enables the full duplex communication system to be established between the wireless image pickup apparatus and the receiving apparatus.

Since the full duplex communication may be established between the wireless image pickup apparatus and the receiving apparatus, according to the present invention, the receiving apparatus is able to acquire the information, such as the identification information of the wireless image pickup apparatus, or the information on the image pickup conditions, and to perform control using the so acquired information. This enables the adjustment of the auto white balance or the auto black balance, in need of the camera information, to be performed even in the wireless image pickup system.

The main line signal may include, in addition to the information on the receiving apparatus, the private information arbitrarily accorded by a user of the image pickup apparatus. The response information may be superposed on the main line signals as a part of the private information. When the communication between the wireless image pickup apparatus and the receiving apparatus is the packet information, the response signal may readily be superimposed on the main line signals using e.g. the FIFO (first-in first-out) system.

According to the present information, the system information of the wireless image pickup apparatus may at least include the identification information for distinguishing the wireless image pickup apparatus from the other the image pickup apparatus and the information on the image pickup conditions in the wireless image pickup apparatus.

The main line signals transmitted from the wireless image pickup apparatus to the receiving apparatus may be transmitted in a frequency range of 2.4 GHz.

The receiving apparatus may separate the response information from the main line signals transmitted from the wireless image pickup apparatus and accord the separated response information to a control information send-out means configured for sending out the control information to the wireless image pickup apparatus, specifically, a remote controller for the wireless image pickup apparatus.

The control signal, with which the receiving apparatus controls the wireless image pickup apparatus, may be transmitted as speech signals from the receiving apparatus to the wireless image pickup apparatus. For transmitting speech signals from the receiving apparatus to the wireless image pickup apparatus, speech transmitting means, such as an audio modulation unit and an audio transmitter, may be provided on the receiving apparatus. The wireless image pickup apparatus may also be provided with speech receiving means, such as an audio receiver. This audio receiver may be enclosed in the wireless image pickup apparatus, or may be fitted to an audio receiver mechanically distinct from the wireless image pickup apparatus.

The control signal, transmitted as the speech signal, may be transmitted in a frequency range of 800 MHz.

The wireless image pickup apparatus may OFDM modulate the main line signals, while the receiving apparatus may OFDM demodulate the main line signals. For providing the wireless image pickup apparatus with the function of OFDM modulating the main line signals, an OFDM modulator, mechanically distinct from the wireless image pickup apparatus, may be mounted to outside the wireless image pickup apparatus. For adding the OFDM demodulating function for the main line signals to the receiving apparatus, the OFDM demodulating function may be provided to the receiving apparatus.

The receiving apparatus may separate the response information from the OFDM demodulated main line signals and accord the so separated response information to the control signal send-out means configured for sending out the control signal to the wireless image pickup apparatus.

The wireless image pickup apparatus may MPEG modulate the main line signals, while the receiving apparatus may MPEG demodulate the main line signals. For providing the wireless image pickup apparatus with the function of MPEG modulating the main line signals, the MPEG encoder may be enclosed in the wireless image pickup apparatus, whilst an MPEG modulator, mechanically distinct from the wireless image pickup apparatus, may be mounted to outside the wireless image pickup apparatus. For adding the function of MPEG demodulating the main line signals to the receiving apparatus, the receiving apparatus may be provided with an MPEG decoder.

Other objects and advantages, that may be derived from the present invention, will become more apparent from the following explanation of the present invention which is now made in conjunction with the accompanying drawings.

### Brief Description of the Drawings

Fig.1 shows a schematic structure of a wireless camera system made up by the most basic component elements.

Fig.2 is a block diagram showing the structure of the wireless camera shown in Fig. 1.

Fig.3 shows the structure of a wireless camera system comprised of the wireless camera system of Fig.1 and controlling means for the wireless camera added thereto.

Fig.4 is a block diagram showing the wireless camera shown in Fig.3.

Fig.5 shows the communication protocol between a remote controller for a camera and the wireless camera.

Fig.6 shows a schematic structure of the wireless camera in case a plural number of cameras are used for imaging an object.

Fig.7 shows a monitor on which an image transmitted from a wireless camera is displayed and a monitor on which an image transmitted from a cabled camera is displayed.

Fig.8 shows a schematic structure of a wireless camera in case a plural number of wireless cameras are used for imaging an object.

Fig.9 is a block diagram showing an audio modulating unit loaded on a receiving base station and an audio demodulating unit loaded on a wireless camera.

Figs.10A to 10C show main line signals transmitted from a wireless camera to a receiving base station.

### Best Mode for Carrying out the Invention

Referring to the drawings, a preferred embodiment of a controlling method for a wireless image pickup apparatus for a wireless image pickup system of the present invention is hereinafter explained.

In the following description, the constituent elements for realizing substantially the same functions are depicted by the same reference numerals as being the same component elements and redundant explanation therefore is omitted for simplicity.

The wireless image pickup apparatus, employed in the present invention, is a generic term for an apparatus, generally termed a wireless camera, such as a television camera or a video camera, not provided with a cable for connection to other external apparatus, and an image pickup apparatus, configured for imaging an object, and which is capable of transmitting the image information, speech information and so forth, obtained on imaging the object; over a wireless route. A portable terminal, having such wireless imaging function, is also encompassed within the wireless terminal used in the present invention.

First, a wireless camera system, used for a controlling method for the wireless camera according to the present invention, is now explained.

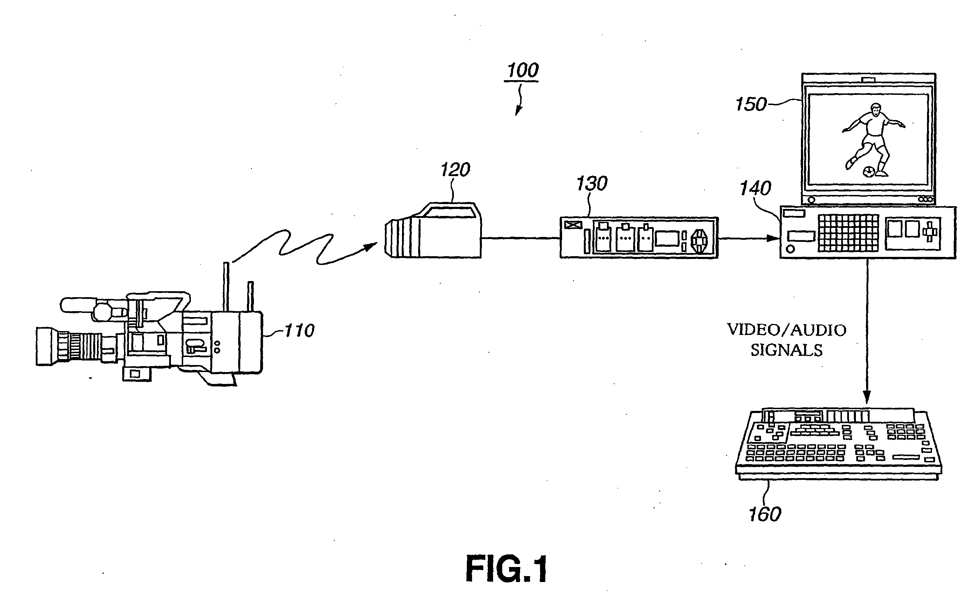

Fig.1 shows schematics of a wireless camera system 100 made up by most fundamental constituent elements. Referring to Fig.1, this wireless camera system 100 includes a wireless camera 110, a downlink converter 120, for receiving signals transmitted over a wireless route from the wireless camera 110, an OFDM demodulator 130 for OFDM demodulating signals received by the downlink converter 120, and an MPEG decoder 140 for MPEG demodulating signals demodulated by the OFDM demodulator 130. The wireless camera system also includes a monitor 150 for outputting the signal demodulated by the MPEG decoder 140 as an image and the speech, and an adjustment table 160 for adjusting the image and the speech of the monitor 150.

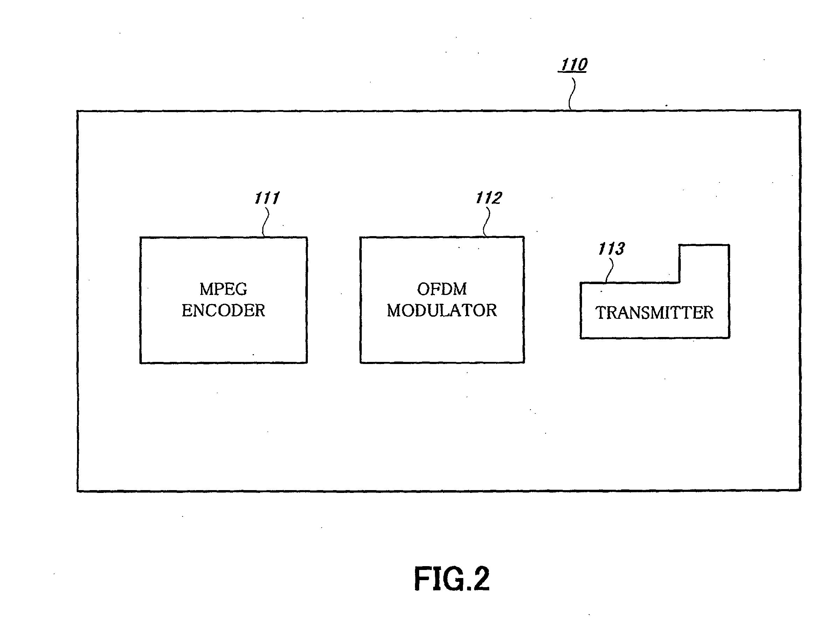

Fig.2 is a block diagram showing the schematic structure of the wireless camera 110.

The wireless camera 110 includes an imaging lens, not shown, a CCD (charge coupled device), a signal processing circuit, and a battery. The wireless camera also includes an MPEG encoder 111 for MPEG modulating the video and audio information, obtained by imaging an object, or the system information of the wireless camera 110, referred to below as the camera information, an OFDM modulator 112 for OFDM modulating data modulated by the MPEG encoder 111, and a transmitter 113 having a transmission antenna for transmitting the data modulated by the OFDM modulator 112 over a wireless route. By exploiting the above configuration, the camera information can be transmitted over a wireless route.

It is noted that the camera information in a signal form is termed the [main line signals]. In addition to the camera information, the private information, which may be optionally accorded by the camera user, may be included in the main line signals.

The MPEG encoder 111 is a means for encoding digital data of an object, imaged by the wireless camera 110, by MPEG. The MPEG is a digital compression system for a moving picture, being standardized by a research group, termed Moving Picture Coding Expert, and encompasses the standards of MPEG1, MPEG2, MPEG4 and MPEG7, depending on the picture transfer rate or the encoding speed. The MPEG, scarcely affecting the picture quality despite picture compression and decompression, is retained to be a standard of the compression and expansion system for the moving digital picture. This MPEG encoder 111 may use the MPEG-2TS (Transport Stream) which is a format that is able to multiplex video and audio data into a sole file and that is used in digital broadcast.

An OFDM (orthogonal frequency division multiplexing) modulator 112 is a means for digital modulation by PSK (phase shift keying) or QAM (quadrature amplitude modulation) in which a large number of orthogonal subcarriers are provided in a transmission band and data is allocated to the amplitude and the phase of these respective subcarriers. This OFDM modulation system is featured by a slowed-down symbol rate because the large number of the subcarriers is transmitted in parallel. Thus, the OFDM modulation system is insusceptible to multipath interference because it enables shortening of the multipath time relative to the time duration of the symbol. Because of these characteristics, the OFDM modulation system is broadly applied to the ground wave digital broadcast or communication which is strongly affected by the multipath interference.

The transmitter 113 is a means for converting the main line signals, encoded and modulated by the MPEG encoder 111 and the OFDM modulator 112, into an electrical wave, and for radiating the so produced electrical wave into air. The transmitter may be roughly divided into the "LC system" and the "quartz system", and also into a type in which the frequency can be changed and a type in which the frequency cannot be changed. The transmitter 113 of the present embodiment may use any system or type. The transmitter 113 transmits the main line signals, with the frequency of 2.4 GHz, to the downlink converter 120 as the electrical wave receiving side.

The downlink converter 120 has enclosed therein a receiving antenna for receiving the main line signals transmitted from the wireless camera system 110.

The OFDM demodulator 130 has enclosed therein a wavefonn tuning unit (tuner) for OFDM demodulating the main line signals OFDM as demodulated by the OFDM modulating unit 112 enclosed in the wireless camera 110.

The MPEG decoder 140 is a means for decoding the main line signals encoded by the MPEG encoder 111 of the wireless camera 110. In this manner, it is possible to obtain again the digital data of the object imaged by the wireless camera 110. As the MPEG decoder 140, a dedicated hardware may be used, or a computer may be operated as an MPEG decoder by installing a program which is designed for having the computer operate as an MPEG decoder.

The monitor 150 is a means for outputting the video and audio information of the object acquired by the MPEG decoder 140. The monitor is used for adjusting e.g. the color tone.

An adjustment table 160 is a means for adjusting the setting of the image pickup conditions of the wireless camera 110 in case there is encountered a problem in color tone of the object displayed on the monitor 150. Taking the color tone adjustment as an example of the above adjustment, the color tone of the image may be adjusted by adjusting the luminance of the red R, green G and the blue B, as three elements of the light, to adjust the color tone of the image. The color tone adjustment may be classified into relative adjustment for adjusting R, G and B, based on the current color as a reference, and absolute adjustment for adjusting R, G and B to absolute luminance values without regard to the current color tone.

The above is the explanation of the wireless camera system 100 as the most fundamental constituent element. The wireless camera system, having added means for controlling the wireless camera from the main line signal receiving side, is hereinafter explained.

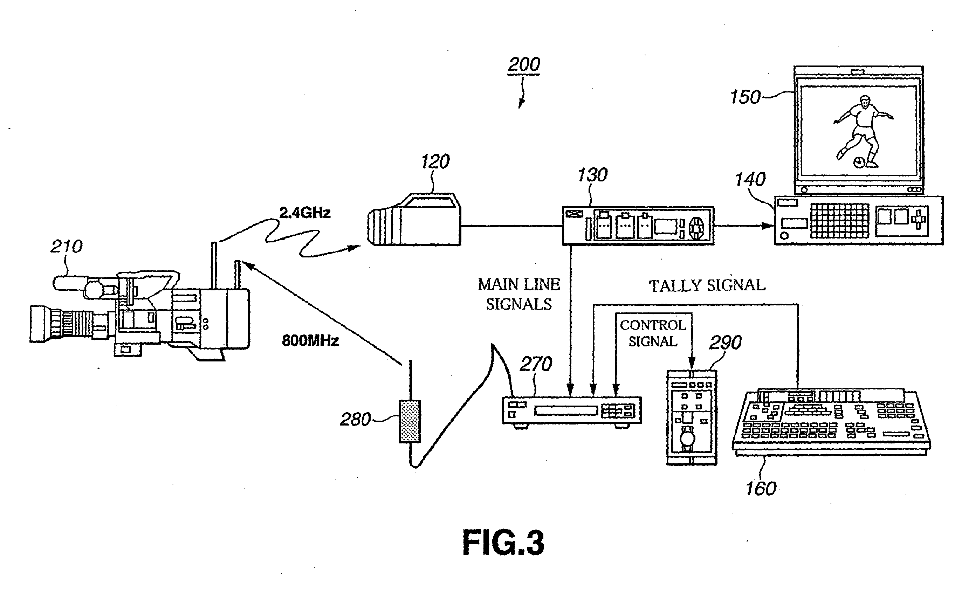

Fig.3 illustrates schematics of a wireless camera system 200 corresponding to the wireless camera system 100 having added means for transmitting a control signal for a wireless camera as speech. Referring to Fig.3, the wireless camera system 200 includes a wireless camera 210, a downlink converter 120 for receiving signals transmitted over a wireless route from a wireless camera 210, an OFDM demodulator 130 for OFDM demodulating the signal received by the downlink converter 120, and an MPEG decoder 140 for MPEG decoding the signals demodulated by the OFDM demodulator 130. The wireless camera system further includes a monitor 150 for outputting the signal demodulated by the MPEG decoder 140 as the image/speech, and an adjustment table 160 for adjusting the image and the speech of the monitor 150.

This wireless camera system 200 is featured by a remote controller 290, referred to below as a camera remote controller, sending out a control signal by remote control to the wireless camera 210, am audio modulator 270 for modulating a control signal output from the adjustment table 160 and the remote controller 290 to the wireless camera 210 into speech signals, and an audio wireless transmitter 280 for transmitting speech signals modulated by the audio modulator 270 to the wireless camera 210.

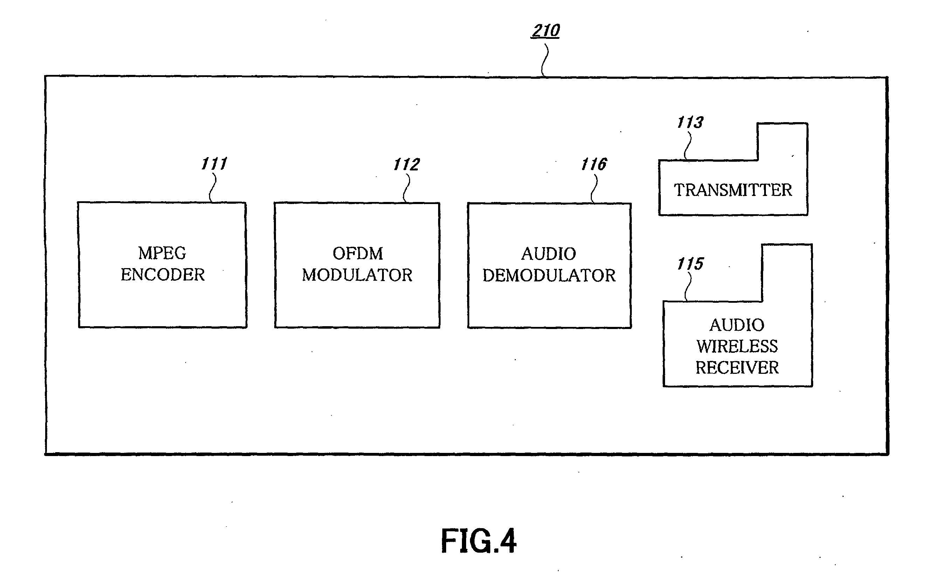

Fig.4 is a block diagram showing a schematic structure of the wireless camera 210.

The wireless camera 210 includes an imaging lens, not shown, a CCD (charge coupled device), a signal processing circuit, and a battery. The wireless camera also includes an MPEG encoder 111 for MPEG modulating the camera information, such as the video and audio information, obtained by imaging an object, an OFDM modulator 112 for OFDM modulating the camera information, modulated by the MPEG encoder 111, and a transmitter 113 having a transmission antenna for transmitting the camera information modulated by the OFDM modulator 112 over a wireless route.

Referring to Fig.4, the wireless camera 210 includes an audio wireless receiver 115, receiving speech signals radiated from the audio wireless transmitter 280, and an audio demodulator 116 for demodulating speech signals received by the audio wireless receiver 115.

The audio modulator 270 is a means for modulating the control signal, output from a camera remote controller 290, and a tally signal, output from the adjustment table 160, into speech signals. The audio modulator 270 generates a composite signal, made up of a main signal, a sub-signal and a pilot signal, by e.g. a 38 kHz transmitter. Meanwhile, the tally signal is a signal indicating for which camera control is to be managed.

The audio wireless transmitter 280 is a means for converting the speech signals, modulated by the audio modulator 270, into an electrical wave, which then is radiated into air. The transmitter may be roughly divided into the "LC system" and the "quartz system", and also into a type in which the frequency can be changed and a type in which the frequency cannot be changed. The audio wireless transmitter 280 of the present embodiment may use any system or type. The audio wireless transmitter 280 transmits the speech signals, with the frequency of 800 MHz, to the wireless camera 210 as the electrical wave receiving side.

The remote controller of the camera 290 is a remote control actuator for outputting a control signal for controlling the wireless camera 210.

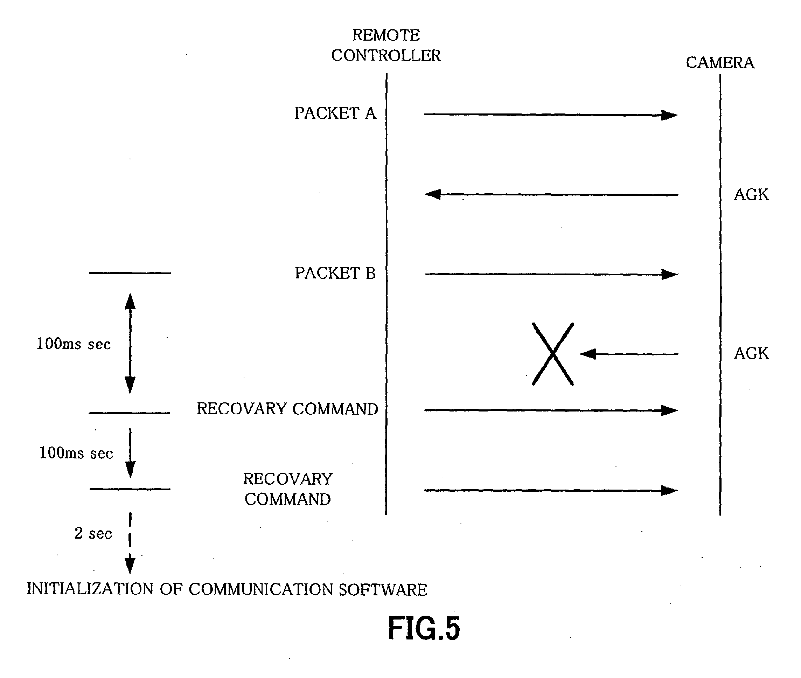

Fig.5 illustrates a communication protocol between the remote controller of the camera 290 and the wireless camera 210. First, as a packet A, a control signal is sent from the emote controller of the camera 290 to the wireless camera 210. If no response (ACK) signal is returned even after lapse of 100 msec (0.1 second) as from the packet transmission, the same control signal is re-transmitted, as a packet B, from the remote controller of the camera 290 to the wireless camera 210. Then, recovery commands are repeatedly issued, once every 100 msec, for the maximum duration of 2 seconds. If no response is returned even after lapse of two seconds after packet transmission, it is determined that the communication has ceased and the communication software is initialized to revert to the initial sequence.

In this manner, it is necessary between the remote controller of the camera 290 and the wireless camera 210 to return a response signal (ACK) on receipt of a packet. Thus, a full duplex communication is substantially required between the remote controller of the 290 and the wireless camera 210.

The remaining component elements of the wireless camera system 200 are substantially the same as the corresponding component elements of the wireless camera system 100 and hence are indicated by the same reference numerals and the corresponding explanation is omitted. By the above configuration, camera control by the remote controller of the camera 290 may be realized, while it is possible to construct a system for transmitting the control signal for the wireless camera as speech signals.

The above described wireless camera systems 100, 200 are systems for imaging an object only with the sole wireless camera 110 or 210. The wireless camera system for imaging an object with plural cameras is now explained.

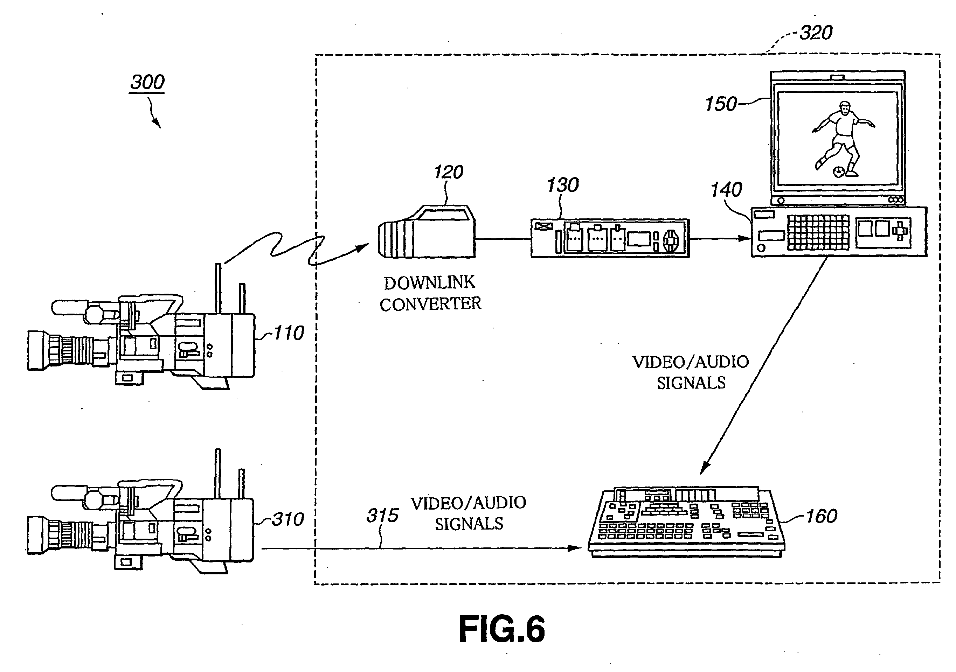

Fig.6 shows schematics of a wireless camera system 300 for imaging an object with plural cameras. Referring to Fig.6, this wireless camera system 300 includes a wireless camera 110, capable of transmitting audio or video signals, obtained on imaging an object, over a wireless route, a cabled camera 310, capable of transmitting video or audio signal, obtained on imaging an object, over a cable, and a receiving base station 320, having a receiving device for receiving the video or audio signals, transmitted from the wireless camera 110 and the cabled camera 310.

This wireless camera system 300 includes plural cameras for imaging an object. Of these cameras, at least one is a wireless camera. In the following explanation of the present embodiment, it is assumed that the wireless camera is the above-mentioned wireless camera 110. The number of the cameras other than the wireless camera 110 may be one, two or more. The type of the cameras other than the wireless camera 110 may be a wireless camera or a cabled camera. In the following explanation, it is assumed that the sole cabled camera 310 is being used as the aforementioned camera(s) other than the wireless camera 110.

The cabled camera 310 is common to the wireless camera 110 in such a respect that it includes an imaging lens, not shown, a CCD (charge coupled device), a signal processing circuit, and a battery. The difference from the wireless camera 110 is that the main line signals, composed of the video/audio information, in the form of electrical signals, obtained on imaging an object, and the camera infonnation, such as the system information of the wireless camera, in the form of electrical signals, are transmitted over a cable 315 to the receiving base station 320 as the receiving device. Thus, in a manner distinct from the wireless camera 110, the cabled camera 310 is not provided with the MPEG encoder, nor with OFDM modulator nor with the transmitter retained to be needed in transmitting the main line signals over a wireless route.

The receiving base station 320 includes a downlink converter 120 for receiving the main line signals from the wireless camera 110, an OFDM demodulator 130 for OFDM demodulating the main line signals received by the downlink converter 120, and an MPEG decoder 140 for MPEG demodulating the main line signals demodulated by the OFDM demodulator 130. In addition, the receiving base station 320 includes a monitor 150 for displaying the main line signals, demodulated by the MPEG decoder 140, a monitor 350 for displaying the main line signals, transmitted from the cabled camera 310, and an adjustment table 160 for adjusting the images on the monitors 150, 350.

Thus, the main line signals, transmitted from the wireless camera 110, are displayed on the monitor 150 through the downlink converter 120, OFDM demodulator 130 and the MPEG decoder 140, whilst the main line signals, transmitted from the cabled camera 310, are displayed on the monitor 350 through the cable 315 without the intermediary of the downlink converter 120, OFDM demodulator 130 or the MPEG decoder 140.

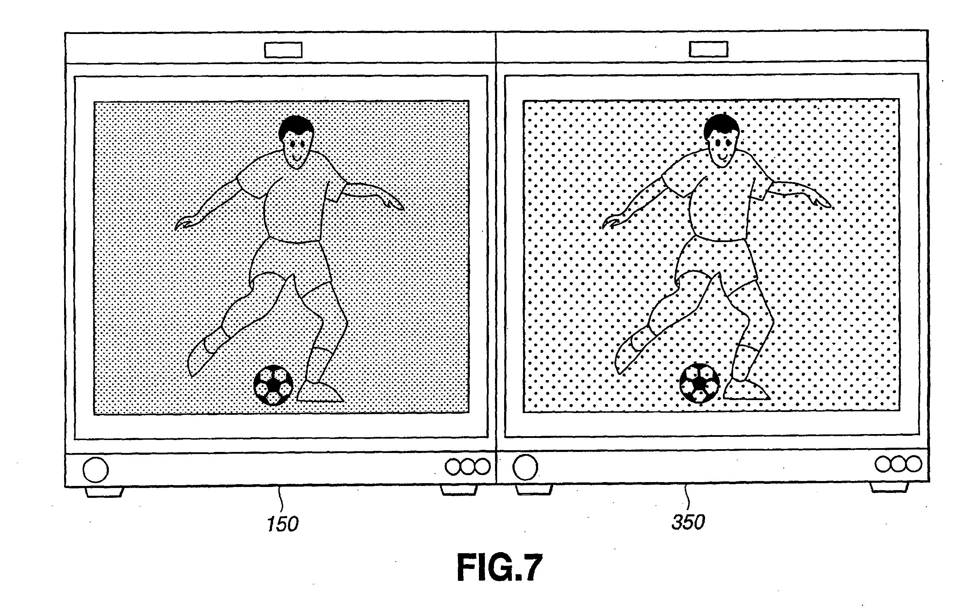

Fig.7 illustrates, by way of comparison, the monitor 150 on which is displayed the image transmitted from the wireless camera 110, and the monitor 350 on which is displayed the image transmitted from the cabled camera 310. On the monitor 150, the main line signals; transmitted from the wireless camera 110, are output as image/speech, whereas, on the monitor 350, the main line signals, transmitted from the cabled camera 310, are output as image/speech. When the same object is imaged with the plural cameras, as described above, difference in color tone at the switching point poses a problem. This problem arises not only when the same object is imaged from the same direction and angle, but also when the same object is imaged from different directions and angles. It is therefore necessary to adjust the color tone from the adjustment table 160 and from the remote controller of the camera 290 for the wireless camera 110 and for the cabled camera 310.

As for the cabled camera 310, full duplex communication with the receiving base station 320 is possible, so that handshaking is possible. Thus, it is possible for the adjustment table 160 and the remote controller of the camera 290 to transmit the control signal to the cabled camera 310 to obtain the camera information instantaneously as the response signal. Consequently, all white balance or all black balance may be adjusted extremely readily.

However, only unidirectional communication is possible from the remote controller of the camera to the wireless camera 110, whilst full duplex communication is not possible, as discussed above. Thus, in the present embodiment, full duplex communication is effectively established in the communication between the wireless camera and the remote controller of the camera by employing the following technique.

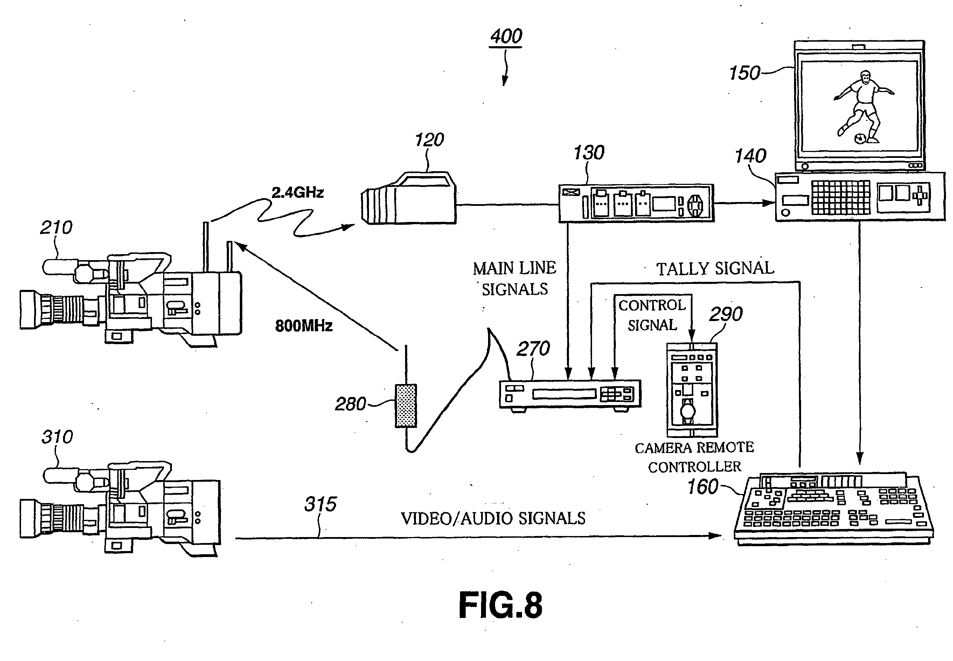

Fig.8 illustrates schematics of a wireless camera system 400 embodying the present invention. The wireless camera system 400 is a system in which the feature of the wireless camera system 200 and that of the wireless camera system 300 are combined together. Thus, by combining the wireless camera system 300, in which an object is imaged with plural cameras, with the wireless camera system 200, in which the wireless camera is controlled from the remote controller of the camera 290, and by employing the following technique, full duplex communication is substantially achieved between the remote controller of the camera 290 and the wireless camera 210.

The component elements in Fig.8, which are substantially the same as those of the aforementioned wireless camera systems 200, 300, are depicted by the same reference numerals, and are not explained.

First, the communication from the remote controller of the camera 290 to the wireless camera 210 is explained.

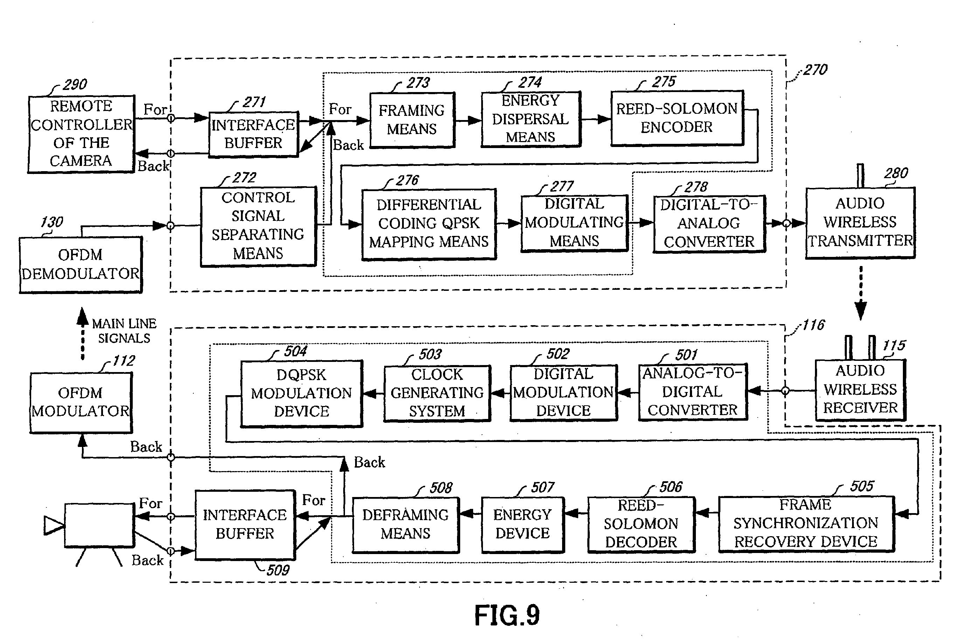

Fig.9 is a block diagram showing details of the audio modulator 270 mounted on the receiving base station 320. Referring to Fig.9, the audio modulator 270 includes an interface buffer 271, a control signal separating means 272, a framing means 273, an energy dispersal means 274, a Reed-Solomon encoder 275, a differential coding QPSK mapping means 276, a digital demodulating means 277, and a digital-to-analog converter 278 for converting a digital signal into an analog signal (audio signal).

Referring to Fig.9, arrow marks indicate the signal flowing direction. "FOR" indicates a forward direction and "BACK" indicates the backward direction. The audio modulator 270 and the audio demodulator 116 are hereinafter explained, in accordance with the signal flowing direction.

First, a control signal is output from the emote controller of the camera 290.

The interface buffer 271 is an interface for temporarily buffering a signal output from the remote controller of the camera 290 and for converting the signal level of the signal to a signal level usable within the audio modulator 270.

The control signal separating means 272 separates the response signal superposed on the main line signals transmitted from the wireless camera 210.

The so separated response signals are returned to the remote controller of the camera 290 through the interface buffer 271, while being superposed (time division multiplexed) on the control signal and sent to the downstream side framing means 273.

When the 8-bit based information is input to a transmission channel, designed for 2-bit based transmission, the receiving end is unable to distinguish the boundary of bit strings. Thus, the framing means 273 (frame adaptation unit) appends a synchronization code for distinguishing the boundary of the bit string. For example, the in the MPEG-2TS (Transport Stream) format, 47hex is appended to the leading end of the packet.

Since the information desired to be transmitted is arbitrary, it must be presupposed that a concatenation of zeros (all 0) or a concatenation of ones (all 1) may arrive from time to time. In this case, fixed data are transmitted in succession over a transmission channel, such that clocks cannot be reproduced at the receiving end. Thus, the energy dispersal means (energy dispersal means) 274 is a means for adding a random function by Ex-OR to the information desired to be transmitted and for randomizing the result of Ex-OR to prevent energy concentration from occurring. The receiving end specifies the start position of the energy dispersal, by relying upon the synchronization code appended by the framing means 273, and adds the same random function by Ex-OR to restore the original data.

The Reed-Solomon encoder (R-S encoder) 275 is a means for appending a 4-byte parity to 14 bytes of the original information to permit the receiving end to correct errors. This allows for error correction up to three bytes.

The differential coding QPSK mapping means (DQPSK mapping means) 276 is a means for performing differential encoding. With the differential encoding, the difference between the directly previous data and the data currently desired to be transmitted is made a transmission code by the following method:

The actual information: code rule (0, 0): An = An - 1, Bn = Bn-1 (1, 0): An = -Bn - 1, Bn = An-1 (0, 1): An = Bn-1, Bn = -An -1 (1, 1): An = -An-1, Bn = -Bn-1. Since QPSK uses only the phase as information transmitting means, it can be combined with the above differential coding to achieve satisfactory demodulation characteristics against incessantly changing propagation channel characteristics by a simplified structure.

The digital modulating means (digital modulation means) 277 is a means for superposing an output signal of the differential coding QPSK mapping means 276 of the previous stage on the phase of a 7.5 kHz carrier wave.

The digital-to-analog (D/A) converter 278 is a means for converting the digital signal, output from the digital modulation means of the previous stage, into an analog signal (audio signal).

The speech signal, output from the audio modulator 270, is radiated by the audio wireless transmitter 280. The speech signals, radiated by the audio wireless transmitter 280, are received by the audio wireless receiver 115, loaded on the wireless camera 210, and thence supplied to the audio demodulator 116.

The audio demodulator 116, loaded on or enclosed in the wireless camera 210, on the demodulating side, is now explained.

Referring to Fig.9, the audio demodulator 116 includes an analog-to-digital (A/D) converter 501 for converting the analog signal (audio signal) into a digital signal, a digital modulation device 502, a clock generating system 503, a DQPSK modulation device 504, a frame synchronization recovery device 505, a Reed-Solomon decoder 506, an energy device 507 and a framing means 505.

The analog-to-digital converter 501 is a means for converting the analog signal (audio signal), received by the audio wireless receiver 115, into digital data.

The digital demodulating means (digital demodulation unit) 277 is a means for demodulating the modulation by the digital modulating means 277 in the audio modulator 270.

The clock generating means (clock recovery means) 503 is a means for applying suitable filtering to a modulated carrier wave of 7.5 kHz to regenerate transmission clocks.

The DQPSK decoding (DQPSK demodulation) device 504 is a means for demodulating the mapping by the differential coding QPSK mapping means 276 in the audio modulator 270.

The framing means (frame sync recovery means) 505 specifies the leading end of a Reed-Solomon packet (18 bytes) and the initializing timing for the random function for energy dispersal from the sync code inserted by the framing means 273 in the audio modulator 270.

The Reed-Solomon decoder (R-S decoder) 506 is a means for decoding the encoding by the Reed-Solomon encoder 275 in the audio modulator 270.

The energy spread decoder (energy dedispersal unit) 507 is a means for decoding the energy dispersal executed by the energy dispersal means 274 in the audio modulator 270.

The deframing means (frame deadaptation means) 508 is a means for separating a control signal form audio data. Although the present embodiment has been directed to the case of transmitting the control signal as audio signal, this deframing means 508 is not needed if the control signal is not transmitted as audio signal.

An interfacing buffer 509 is an interface for transiently buffering the control signal and for converting the control signal to a signal level usable in the wireless camera 210. The interfacing buffer also temporarily buffers the response signal, output from the wireless camera 210, to a signal level usable in the downstream side OFDM modulator 112.

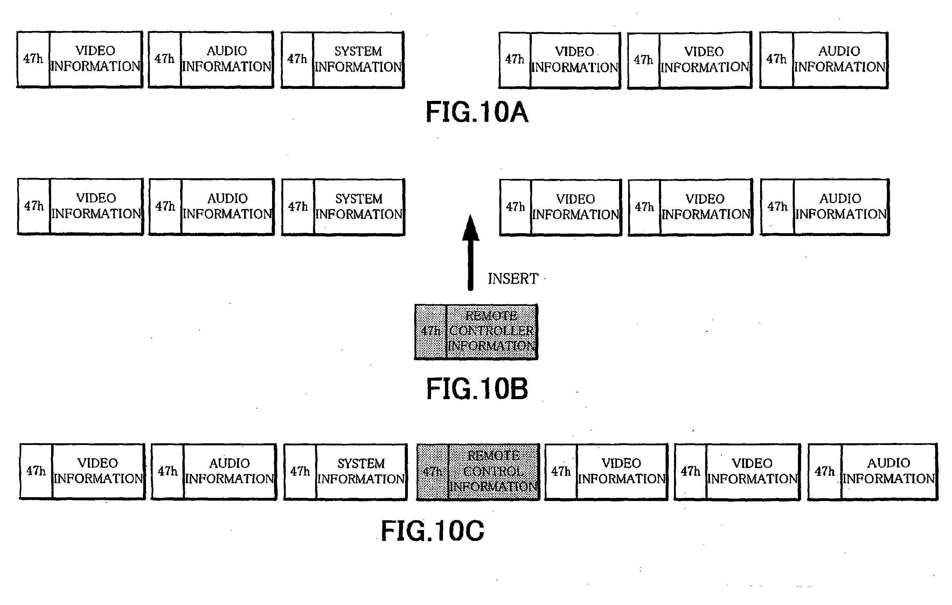

Figs.10A to 10C conceptually show data of the main line signals transmitted from the wireless camera 310 to the receiving base station 320. In the main line signals, transmitted from the wireless camera 310 to the receiving base station 320, the private information, which can be arbitrarily inserted by the user, can be included, in addition to the video or audio signals for the object and the camera information, such as the ID of the wireless camera 310 or the packet ID, as shown in Fig.8. In the present embodiment, the response signal (remote controller information) is superposed as part of the private information.

The MPEG, used for compressing the video and speech signals of the main signals, is transmitted by a format termed TS on the transmission channel. The leading end of the TS packet (1 packet = 188 bytes) is 47 hex. Since the TS is the packet information, as shown in Fig.11, multiplexing the remote controller information can be implemented extremely readily using the FIFO (first-in first-out) system.

In the manner described above, a data loop (remote controller of the camera 290→ wireless camera 210→ remote controller of the camera 290), centered about the cabled camera 310, is established.

According to the present invention, the response signal to the camera control signal from the wireless camera 210 to the receiving base station 320 is superposed on the main line signals transmitted from the wireless camera 210 to the receiving base station 320, as described above. In this manner, the full duplex communication is established between the wireless camera 210 and the receiving base station 320. Since the full duplex communication is established between the wireless camera 210 and the receiving base station 320, the camera information of the wireless camera 210 can be acquired and control may be exercised using the so acquired camera information in the receiving base station 320.

The control method for the wireless image pickup apparatus of the wireless image pickup system according to the present invention has been explained in the foregoing by referring to the accompanying drawings. The present invention is, however, not limited to the illustrated embodiment. Those ordinarily skilled in the art should be able to arrive at a variety of changes or corrections, without modifying the purport of the technical concept stated in the claim. These changes or correction are naturally included within the technical scope of the present invention.

The present invention is not limited to the embodiments described with reference to the drawings and, as may be apparent to those skilled in the art, various changes, substitutions or equivalents may be envisaged without departing from the scope and the purport of the invention as defined in the appended claims.

### Industrial Applicability

According to the present invention, described above, the full duplex communication system can be substantially established between the wireless image pickup apparatus and the receiving base station by superimposing the response signal to the control signal for the image pickup apparatus from the receiving base station on the main line signals transmitted from the wireless image pickup apparatus to the receiving base station.

According to the present invention, in which the full duplex communication can be established between the wireless image pickup apparatus and the receiving base station, the receiving base station is able to acquire the information, such as the identification information of the wireless image pickup apparatus or the information on the image pickup conditions, that is the camera information, as well as to exercise control using the camera information. In this manner, adjustment of the all white balance or the auto black balance, in need of the camera information, may be executed even in the wireless image pickup system.

## Claims

1. A controlling method for a wireless image pickup apparatus in a wireless image pickup system, said wireless image pickup system comprising one or more image pickup apparatus for imaging an object, and a receiving apparatus for transmitting a control signal controlling said image pickup apparatus to said image pickup apparatus and for receiving main line signals, including the video/audio information of said object and the system information of said image pickup apparatus including in turn the system information of said image pickup apparatus, from said image pickup apparatus, one of said image pickup apparatus being a wireless image pickup apparatus capable of transmitting said main line signals over a wireless route, wherein
said wireless image pickup apparatus superposes the response information to said control signal from said receiving apparatus on said main line signals to transmit the resulting signal over a wireless route to said receiving apparatus.

2. The controlling method for a wireless image pickup apparatus according to claim 1 wherein said main line signal may include, in addition to said information on said image pickup apparatus, the private information arbitrarily accorded by a user of said image pickup apparatus, said response information being superposed on said main line signals as a part of said private information.

3. The controlling method for a wireless image pickup apparatus according to claim 1 wherein said system information of said wireless image pickup apparatus at least includes the identification information for distinguishing said wireless image pickup apparatus from the other said image pickup apparatus and the information on image pickup conditions in said wireless image pickup apparatus.

4. The controlling method for a wireless image pickup apparatus according to claim 1 wherein said main line signals transmitted from said wireless image pickup apparatus to said receiving apparatus are transmitted in a frequency range of 2.4 GHz.

5. The controlling method for a wireless image pickup apparatus according to claim 1 wherein said receiving apparatus separates said response information from said main line signals transmitted from said wireless image pickup apparatus and accords the separated response information to control information send-out means configured for sending out said control information to said wireless image pickup apparatus.

6. The controlling method for a wireless image pickup apparatus according to claim 1 wherein said control signal with which said receiving apparatus controls said wireless image pickup apparatus is transmitted as speech signals from said receiving apparatus to said wireless image pickup apparatus.

7. The controlling method for a wireless image pickup apparatus according to claim 6 wherein said control signal, transmitted as said speech signal, is transmitted in a frequency range of 800 MHz.

8. The controlling method for a wireless image pickup apparatus according to claim 1 wherein said wireless image pickup apparatus modulates said main line signals with OFDM (orthogonal frequency division multiplexing) modulation and wherein said receiving apparatus OFDM demodulates said main line signals.

9. The controlling method for a wireless image pickup apparatus according to claim 8 wherein said receiving apparatus separates said response information from the OFDM demodulated main line signals and accords the separated response information to said control information send-out means configured for sending out said control information to said wireless image pickup apparatus.

10. The controlling method for a wireless image pickup apparatus according to claim 1 wherein said wireless image pickup apparatus modulates said main line signals with MPEG (Moving Picture Coding Expert) modulation and wherein said receiving apparatus MPEG demodulates said main line signals.
